## Europäisches Patentamt

(19) **European Patent Office**

**Office européen des brevets**

(11) Publication number: **0 241 080**
**B1**

(12) **EUROPEAN PATENT SPECIFICATION**

(45) Date of publication of the patent specification:
**06.12.89**

(51) Int. Cl.⁴: **G11B 5/66,** G11B 5/64,
H01F 10/16

(21) Application number: **87200577.2**

(22) Date of filing: **26.03.87**

(54) Magnetic recording medium and method of manufacturing the same.

(30) Priority: **07.04.86 NL 8600869**

(43) Date of publication of application:
**14.10.87 Bulletin 87/42**

(45) Publication of the grant of the patent:
**06.12.89 Bulletin 89/49**

(84) Designated Contracting States:
**DE FR GB NL**

(56) References cited:
**APLLIED PHYSICS LETTERS, vol. 47, no. 2, 15th
July 1985, pages 178-180, American Institute of Physics,
Woodbury, US; P.F. CARCIA et al.: "Perpendicular
magnetic anisotropy in Pd/Co thin film layered
structures"**

(73) Proprietor: **N.V. Philips' Gloeilampenfabrieken,
Groenewoudseweg 1, NL-5621 BA Eindhoven(NL)**

(72) Inventor: **Den Broeder, Friedrich Johannes Ary, c/o INT.
OCTROOIBUREAU B.V. Prof. Holstlaan 6, NL-5656 AA
Eindhoven(NL)**
Inventor: **Draaisma, Henricus Johannes George, c/o INT.
OCTROOIBUREAU B.V. Prof. Holstlaan 6, NL-5656 AA
Eindhoven(NL)**
Inventor: **Kahle, Alexander, c/o INT. OCTROOIBUREAU
B.V. Prof. Holstlaan 6, NL-5656 AA Eindhoven(NL)**

(74) Representative: **Weening, Cornelis et al,
INTERNATIONAAL OCTROOIBUREAU B.V. Prof.
Holstlaan 6, NL-5656 AA Eindhoven(NL)**

## Description

The invention relates to a magnetic recording medium comprising a substrate of a non-magnetic material and a magnetic thin layer with perpendicular anisotropy, in which the magnetic thin layer comprises alternate layers of Pd and Co.

The invention also relates to a method of manufacturing such a magnetic recording medium.

Magnetic thin layers with perpendicular anisotropy are used for the perpendicular method of magnetic recording of, for example, digital information, in which a considerably higher linear density (per unit of length of the information track) can be acquired than that which is provided by longitudinal magnetic recording. In perpendicular (sometimes termed vertical) magnetic recording the magnetic flux travels straight across the medium in alternate domains from one surface to the other instead of longitudinally parallel to the surface of the medium.

In the article "Perpendicular magnetic anisotropy in Pd/Co thin film layer structures" by P.F. Carcia et al. in Applied Physics Letters, 47(2), pp. 178-180 (1985), the use of sputtered layer structures of alternately the non-magnetic Pd and the magnetic Co is described for perpendicular magnetic information storage. The layer thickness of the Co-layers is 0.47 to 0.72 nm, the layer thickness of the Pd-layers is 1.06 to 7.84 nm. The saturation magnetisation $4 \pi M_S$ is 1480 to 6010 G, the coercive force $H_C$ is 350 to 550 Oe and the remanent magnetic ratio with which is indicated the ratio of the remanence measured in a field perpendicular to the thin layer and parallel to the layer, $M_R (\perp)/M_R (//)$ is 1.1 to 10. This latter value indicates the easy axis of magnetisation and in a thin film with perpendicular anisotropy it exceeds 1. The thin layers with the greatest saturation magnetisation prove to show the smallest remanent magnetic ratio. Moreover, comparative experiments have demonstrated that such thin layer structures only show a small magnetic remanence $M_R$ when the saturation magnetisation $M_S$ is large.

It is an object of the invention to provide a magnetic recording medium having an improved signal-to-noise ratio as compared with prior art recording media, using the following basic recognition.

Information is stored (recorded) in the magnetic recording medium in the form of small areas (domains) in the magnetic layer with an oppositely directed magnetisation as compared with the surrounding areas. Information is read by means of a magnetic head which converts local discontinuities of the perpendicular magnetisation and emanating fields into electrical signals. When the remanent magnetisation in the thin layer is considerably smaller than the saturation magnetisation, smaller subdomains of oppositely directed magnetisation or with a magnetisation which is parallel to the thin layer instead of perpendicular thereto are present in the domains. The transitions between such subdomains cause an undesired electric signal (magnetic noise) when reading the magnetic information.

The strength of the information signal depends on the difference in remanent magnetisation of two oppositely magnetized areas and hence is proportional to $M_R (\perp)$. The strength of the noise depends on the difference between the saturation magnetisation $M_S$ and the remanence $M_R (\perp)$. From this it follows that a criterion for a large signal-to-noise ratio is that

$$\frac{M_R (\perp)}{M_S - M_R (\perp)}$$

must be large. In order to be able to obtain a strong signal, $M_S$ must also be large. Other known requirements which a magnetic recording medium with perpendicular anisotropy must satisfy are : the remanent magnetic ratio must be larger than 1 and the coercive force preferably is between 200 and 3000 Oe. These requirements remain in force.

According to the invention, the object of providing a magnetic recording medium with a large signal-to-noise ratio is achieved by a magnetic recording medium as described in the opening paragraph which is further characterized in that the thickness of the individual layers of Pd is between 0.2 and 2.0 nm and that the individual layers of Co consist of at least one monolayer of Co-atoms and have a thickness which is smaller than 0.3 nm.

In a preferred embodiment of the magnetic recording medium in accordance with the invention the thickness of the individual layers of Pd is between 0.4 and 2.0 nm.

Because the quantity of non-magnetic Pd is reduced as compared with the prior art the magnetic thin layer consisting of Pd and Co has a large saturation magnetisation. The use of very thin Co-layers results in a large signal-to-noise ratio. The Co-layer at least has an average thickness of one monolayer of atoms.

In a suitable embodiment of the magnetic recording medium in accordance with the invention the overall thickness of the magnetic thin layer (all Co and Pd layers taken together) is 0.1 to 2 µm.

In a preferred embodiment of the magnetic recording medium in accordance with the invention a layer of Pd in a thickness of 10 to 40 nm is present between the substrate and the magnetic thin layer. Herewith it is achieved that the following layers assume a suitable crystallographic orientation. For this purpose it is also possible to use a layer of Ti in a thickness of 20 to 200 nm.

It is a further object of the invention to provide a method of manufacturing a magnetic recording medium. The sputtering method known from the prior art cannot be used for this purpose due to the occurrence of alloy formation at the interfaces of the individual layers. As a result of the small thickness of in particular the Co layers, the contribution of the undesired alloys would predominate in the magnetic recording medium in accordance with the invention.

The object to provide a suitable method is satisfied according to the invention by a method in which the individual layers of Pd and Co are manufactured by means of vacuum vapour deposition. This technique is described, for example, in an article by T. Shinjo et al. in Journal of the Physical Society of Japan, 52(9), pp. 3154-3162 (1983).

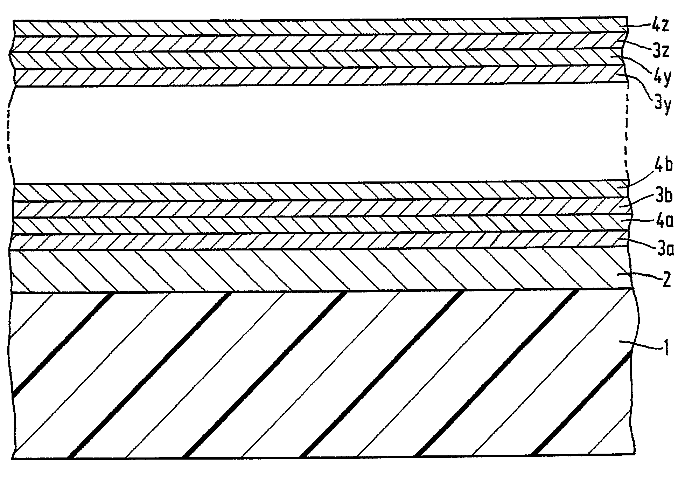

The invention will be described in greater detail with reference to examples and comparative examples and with reference to a drawing, in which the sole Figure is a cross-sectional view (not drawn to scale) of a magnetic recording medium according to the invention.

Example of the method according to the invention.

A magnetic thin layer was manufactured on a substrate 1 of silicon. Other rigid materials, such as quartz or glass, and flexible materials, such as polyester film or polyimide film are also to be considered as substrates. For certain applications it is advantageous to use as a sublayer on the substrate a layer of a soft magnetic material, for example, permalloy ($Ni_{80}Fe_{20}$). Magnetic recording media can be manufactured, for example, in the form of a rigid or flexible disc or in the form of a flexible tape.

The substrate was placed in a vacuum bell jar in which the vapour of each metal to be provided was generated by means of electron beam evaporators, the evaporation rate being controlled by means of quartz crystal oscillators. The pressure during the vapour deposition was smaller than $10^{-4}$ Pa, the vapour deposition rate was smaller than $10^{-1}$ nm/sec. The sources (Pd and Co) were alternately covered by means of shutters during deposition of other metal. If a substrate in the form of a tape is chosen, a continuous method may be used in which the tape is transported over several sources (if desired repeatedly).

According to the example, a first Pd-layer 2 was provided in a thickness of 20 nm. Co-layers 3a , 3b ,.....3y , 3z in a thickness of 0.2 nm and alternated by Pd-layers 4a , 4b , ....4y ,4z in a thickness of 0.45 nm were then deposited, in all 300 layers of each metal. By means of X-ray diffraction it was established that a multilayer structure had formed.

By means of a vibrating sample magnetometer magnetic properties were measured with fields parallel to and perpendicular to the magnetic thin layer. The magnetisations $4\pi M_S$ and $4\pi M_R$ were determined by dividing the measured magnetic moment by the overall volume of the magnetic thin layer (Pd and Co). The results are recorded in the table.

The manufactured magnetic recording medium satisfies the requirement that the ratio $M_R$ ($\perp$)/($M_S$-$M_R$ ($\perp$)) has strongly increased with respect to prior art recording media.

Examples according to the invention and comparative examples .

In the table the results are recorded of measurements on a number of recording media according to the invention. In the table, n is the number of layers of both Co and Pd, under Co and Pd are indicated the thicknesses of the individual layers in nm. $4\pi M_S$ is the saturation magnetisation in Gauss, $4\pi M_R$ is the remanence in Gauss in the direction perpendicular to the magnetic thin layer. $M_R(\perp)$/($M_S$-$M_R$ ($\perp$)) is the index figure which according to the invention must have a high value in order to obtain a high signal-to-noise ratio. Furthermore recorded in the table are the remanent magnetic ratio (which must be larger than 1 for a perpendicular method of magnetic recording) and the coercive force in Oersted.

For comparison, the results are recorded in the table of measurements of magnetic recording media which do not satisfy the requirements according to the invention.

In magnetic recording media in which the thickness of the Co-layers is 0.4 nm and which otherwise are manufactured by means of the method according to the invention both the index figure which determines the signal-to-noise ratio and the remanent magnetic ratio prove to be considerably lower than in the magnetic recording media according to the invention. Although the saturation magnetisation is larger, due to the comparatively larger quantity of Co, this does not compensate for the disadvantages of a reduced signal-to-noise ratio.

For comparison are also recorded the results of one of the multilayer systems as described in the already mentioned article by P.F. Carcia et al., which results are in agreement with those in the previously described comparative examples.

Measurements of various homogeneous CoCr-layers as they are used according to the prior art for perpendicular magnetic recording, see, for example, British Patent Specification GB 2125069, demonstrate that both the ratio $M_R$ ($\perp$)/$M_S$-$M_R$ ($\perp$) and the remanent magnetic ratio are smaller than when the magnetic thin layer according to the invention is used. Another known magnetic recording medium for vertical information storage in which the magnetic layer consists of $BaFe_{12}O_{19}$ powder in a polymeric binder material shows, in addition to magnetic noise, also noise as a result of the particulate character of the magnetic layer.

The magnetic recording medium according to the invention shows a suitable saturation magnetisation and coercive force and is distinguished by a high remanent magnetic ratio and a particularly large value of the index figure $M_R$ ($\perp$)/($M_S$-$M_R$ ($\perp$)) and hence is suitable for use according to the perpendicular method of magnetic recording with a large signal-to-noise ratio, in particular for digital information storage of, for example, video signals or data for digital information processing.

| | n | Co (nm) | Pd (nm) | $4\pi M_S$ (G) | $4\pi M_R$ (#) (G) | # | # | $H_C$ (Oe) |
|---|---|---|---|---|---|---|---|---|
| according to the invention | | | | | | | | |
| Co/Pd | 300 | 0.2 | 0.45 | 8550 | 7940 | 13 | 20 | 2450 |
| | 250 | 0.2 | 0.67 | 7030 | 6740 | 23 | 18 | 2500 |
| | 200 | 0.2 | 0.90 | 5530 | 5360 | 32 | 21 | 2250 |
| | 200 | 0.2 | 1.12 | 4290 | 4030 | 16 | 13 | 2460 |
| | 150 | 0.2 | 1.35 | 3460 | 3300 | 21 | 8.5 | 2140 |
| | 150 | 0.2 | 1.80 | 2820 | 2700 | 23 | 11 | 1580 |
| not according to the invention | | | | | | | | |
| Co/Pd | 250 | 0.4 | 0.45 | 11150 | 1370 | 0.14 | 1.0 | 800 |
| | 150 | 0.4 | 0.90 | 8340 | 1360 | 0.24 | 2.1 | 940 |
| | 100 | 0.4 | 1.80 | 4950 | 1750 | 0.55 | 3.3 | 900 |
| Co/Pd (Carcia et. al.) | 200 | 0.47 | 1.06 | 6010 | – | – | 1.5 | 550 |
| CoCr (homogeneous layer) | – | – | – | 2500–5000 | 500–1000 | 0.25 | 1–2 | 200–2000 |

## Claims

1. A magnetic recording medium comprising a substrate of a non-magnetic material and a magnetic thin layer with perpendicular anisotropy in which the magnetic thin layer comprises alternate layers of Pd and Co, characterized in that the thickness of the individual layers of Pd is between 0.2 and 2.0 nm and that the individual layers of Co consist of at least one monolayer of Co-atoms and have a thickness which is smaller than 0.3 nm.

2. A magnetic recording medium as claimed in Claim 1, characterized in that the thickness of the individual layers of Pd is between 0.4 and 2.0 nm.

3. A magnetic recording medium as claimed in Claim 1 or 2, characterized in that the overall thickness of the magnetic thin layer is 0.1 to 2 $\mu$m.

4. A magnetic recording medium as claimed in any of the Claims 1 to 3, characterized in that a layer of Pd in a thickness of 10 to 40 nm is present between the substrate and the magnetic thin layer.

5. A magnetic recording medium as claimed in any of the Claims 1 to 3, characterized in that a layer of Ti in a thickness of 20 to 200 nm is present between the substrate and the magnetic thin layer.

6. A method of manufacturing a magnetic recording medium as claimed in any of the Claims 1 to 5, characterized in that the individual layers of Pd and Co are manufactured by means of vacuum vapour deposition.

## Patentansprüche

1. Magnetischer Aufzeichnungsträger mit einem Substrat aus einem nicht-magnetischen Werkstoff und einer magnetischen dünnen Schicht mit senkrechter Anisotropie, wobei die magnetische dünne Schicht abwechselnd Pd- und Co-Schichten aufweist, dadurch gekennzeichnet, dass die Dicke der jeweiligen Pd-Schichten zwischen 0,2 und 2,0 nm beträgt und dass die jeweiligen Co-Schichten aus wenigstens einer Monoschicht aus Co-Atomen bestehen und eine Dicke aufweisen, die weniger als 0,3 nm beträgt.

2. Magnetischer Aufzeichnungsträger nach Anspruch 1, dadurch gekennzeichnet, dass die Dicke der jeweiligen Pd-Schichten zwischen 0,4 und 2,0 nm beträgt.

3. Magnetischer Aufzeichnungsträger nach Anspruch 1 oder 2, dadurch gekennzeichnet, dass die Gesamtdicke der magnetischen dünnen Schicht 0,1 bis 2 µm beträgt.

4. Magnetischer Aufzeichnungsträger nach einem der Ansprüche 1 bis 3, dadurch gekennzeichnet, dass eine Pd-Schicht mit einer Dicke von 10 bis 40 nm zwischen dem Substrat und der magnetischen dünnen Schicht vorhanden ist.

5. Magnetischer Aufzeichnungsträger nach einem der Ansprüche 1 bis 3, dadurch gekennzeichnet, dass eine Ti-Schicht mit einer Dicke von 20 bis 200 nm zwischen dem Substrat und der magnetischen dünnen Schicht vorhanden ist.

6. Verfahren zum Herstellen eines magnetischen Aufzeichnungsträgers nach einem der Ansprüche 1 bis 5, dadurch gekennzeichnet, dass die jeweiligen Pd- und Co-Schichten in einem Aufdampfverfahren im Vakuum hergestellt sind.

**Revendications**

1. Milieu d'enregistrement magnétique comprenant un substrat en matériau non magnétique et une couche magnétique mince présentant une anisotropie perpendiculaire, la couche magnétique mince comprenant des couches alternativement en Pd et en Co, caractérisé en ce que l'épaisseur des couches individuelles de Pd est comprise entre 0,2 et 2,0 nm et que les couches individuelles de Co sont constituées au moins par une seule couche en atomes de Co et présentent une épaisseur qui est inférieure à 0,3 nm.

2. Milieu d'enregistrement magnétique selon la revendication 1, caractérisé en ce que l'épaisseur des couches individuelles de Pd est comprise entre 0,4 et 2,0 nm.

3. Milieu d'enregistrement magnétique selon la revendication 1 ou 2, caractérisé en ce que l'épaisseur totale de la couche magnétique mince est comprise entre 0,1 et 2 µm.

4. Milieu d'enregistrement magnétique selon l'une des revendications 1 à 3, caractérisé par la présence d'une couche de Pd d'une épaisseur de 10 à 40 nm entre le substrat et la couche magnétique mince.

5. Milieu d'enregistrement magnétique selon l'une des revendications 1 à 3, caractérisé par la présence d'une couche de Ti d'une épaisseur de 20 à 200 nm entre le substrat et la couche magnétique mince.

6. Procédé pour la réalisation d'un milieu d'enregistrement magnétique selon l'une des revendications 1 à 5, caractérisé en ce que des couches individuelles de Pd et de Co sont réalisées par dépôt de vapeur sous vide.